# EUROPEAN PATENT SPECIFICATION

(11) **EP 2 783 823 B1**
(45) Date of publication and mention of the grant of the patent: **02.05.2018**
(21) Application number: 13001558.9
(22) Date of filing: 26.03.2013
(51) Int. Cl.: B28D 1/08, B23D 57/00

(54) **Improved wire saw for conducting an endless diamond wire**
Verbesserte Drahtsäge zum Führen eines Endlosdiamantdrahts
Scie à fil améliorée destinée à conduire un fil de diamant sans fin

(43) Date of publication of application: 01.10.2014
(73) Proprietor: Diamant Wire Teknikk AS, 1787 Berg i Østfold (NO)
(72) Inventor: Karlsen, Per Ivar, N-1769 Halden (NO); Søyland, Roger, N-1440 Drøbak (NO)
(74) Representative: Fluge, Per Roald

(56) References cited:
- EP-A1- 0 541 813
- JP-A- H06 146 285
- NO-B- 178 534

## Description

### Introduction and problem to be solved

It is easy to diamond wire cut out vertical and inclined shafts in the rock because it is rarely a problem with nonplanar cuts. It is very difficult to make straight generally horizontal cuts in the rock, e.g, to cut out a generally horizontal tunnel. An essential problem is to cut a flat floor. We are not aware that anyone has tried to cut horizontally with a so-called "blind cut", i.e. working towards the bottom of the borehole.

### Background art

Japanese patent publication JP6146285 shows an apparatus for cutting out vertically between two vertical boreholes. US patent US558483 shows an apparatus for wire cutting vertically down by means of the weight of the apparatus. US patent US2050761 shows pulleys that move on tracks along rods 21 by means of a weight. US2577545 shows pulleys that move along guides. US454712 illustrates struts with pulleys that are driven downwards into guide holes using weights. US1735012 shows a screw mechanism for guiding pulleys, and JP5332034 shows pulleys that are moveable along guide rails. The present invention relates to a wire saw system as per the preamble of claim 1. Such a wire saw system is known from EP0541813.

### Short summary of the invention

The invention is a wire saw system comprising the combination of features of independent claim 1.

### Figure captions

The invention is illustrated in the attached drawings, wherein:

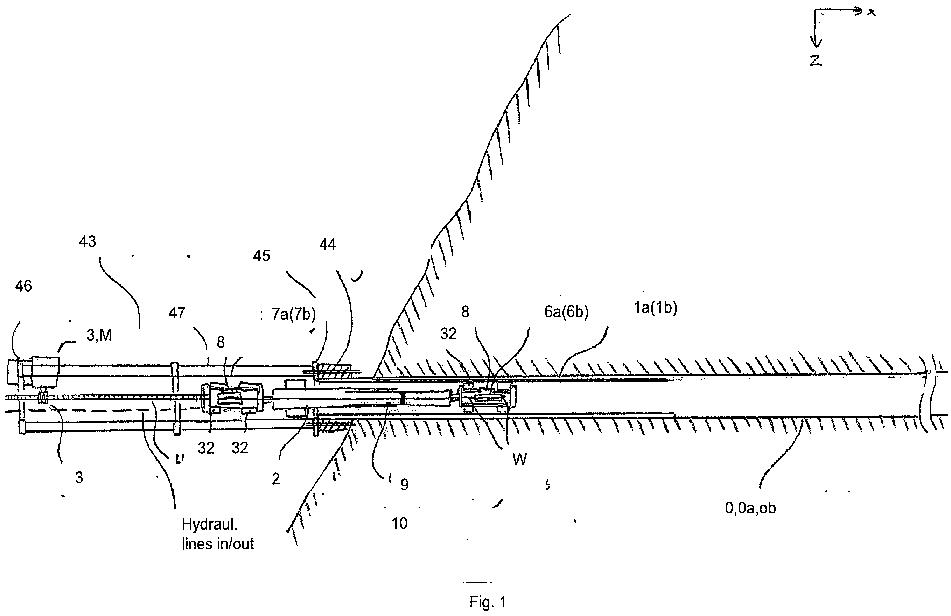

Fig. 1 is a vertical cross-section of a guide bore (0) with a liner pipe section (1a) inserted into the outer few meters of the guide bore (0). The parallel guide bores (0, 0) are drilled to a length of 40 - 100 m or more as a preparation for the slit cutting process to be conducted with the apparatus of the present invention. In the illustrated embodiment a clamp (44) is attached to the outer end of the liner pipe (1a)(1b) for forming a basis for attaching the innermost face-near ring (44) of the guide frame (43). In the embodiment shown the actuator (3) for the rod (4) for pushing the wire saw wagons (2) forward into the guide bore (0). The guide rails are illustrated with too large separation in this illustration, they shall guide the lateral support wheels (32) of the wagon before the wheels (32) enter the guide bore. The inner ring (45) of the guide frame (43) may in an alternative embodiment of the invention be bolted directly to the rock face around the opening of the guide bore (0), preferably onto a vertical cut rock face through which the guide bore is drilled perpendicularly through the rock surface. In that case, the liner pipe(s) is/are not strictly required. The wire wagon (2) is shown here with the fore wheel (6) inserted into the guide bore in the initial cutting phase.

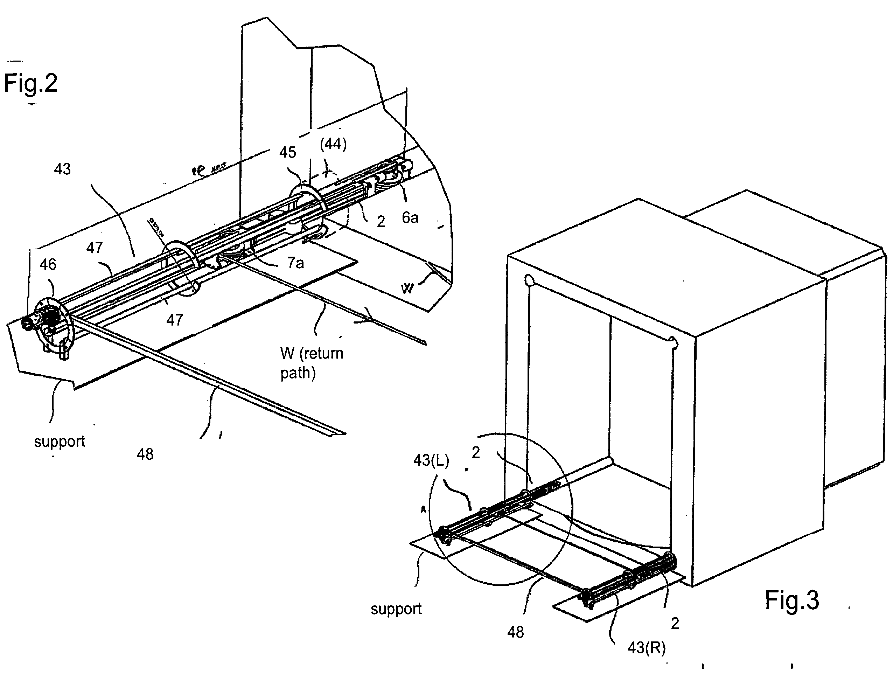

Fig. 2 is a perspective view of the left part of the guide frame (43) with a rock saw wagon (2) of the invention inserted partly into the guide frame (43), partly into the outermost portion of the guide bore (0). A cutting diamond wire (w) spanned between the left wagon (2) and the right wagon (symmetrically arranged, shown in Fig. 3) and shown cutting a portion of the slit to be cut. A rear frame connector (48) connects the left and right guide frames (43, 43). Please notice that the left and right guide frames relate to the situation shown in Fig. 2 wherein the bottom cut is to be made through two lower guide bores (0, 0).
Fig. 3 is a smaller scale view comprising the view of Fig. 2. The bottom cut is being prepared to be made through two lower guide bores (0, 0).and that the guide frame with the wagons may be rotated to a vertical position to prepare cutting between the lower left and upper left guide bore, or cutting between the lower right and upper right guide bore, and finally to cut between the upper left and the upper right guide bore. For illustration purposes a block to be cut out is shown displaced inwards, which is not natural. When the floor, walls and ceiling cut have been made throughout the intended depth of the guide bores, usually about 100 metres, the cut-out block will reside on the bottom cut floor, and the cut-out block may be mined out or cut out using a vertical block cutting technique cutting the block out bit by bit. A significant advantage of the present technique is the fact that the floor, walls and ceiling formed may be rather smooth, cut-out surfaces instead of blasted, cracked, uneven surfaces, so as for reducing leakage from and to the tunnel formed, and for facilitating installation of tunnel equipment.

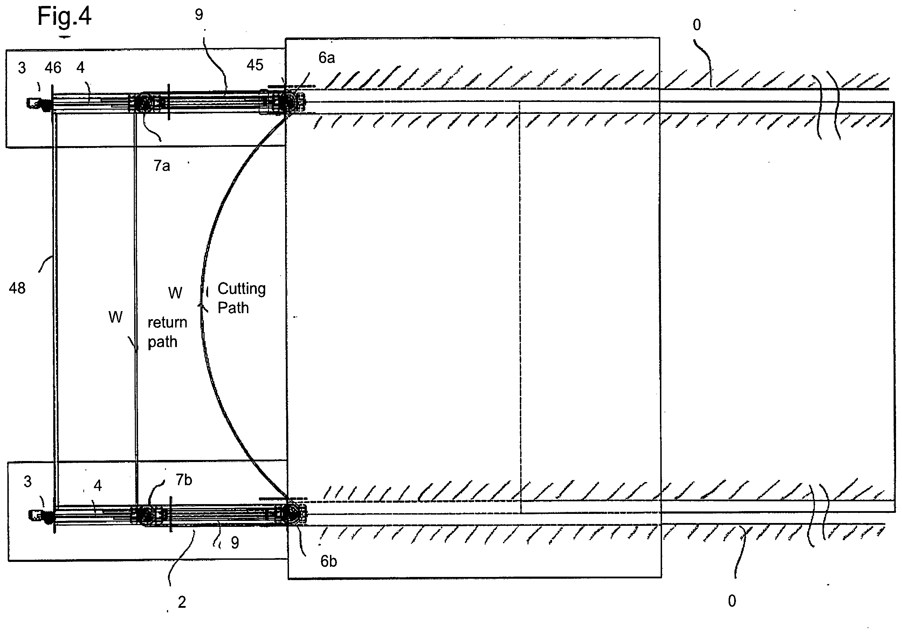

Fig. 4 is a horizontal section of the embodiment illustrated in Fig. 3 above. Two parallel guide bores (0) extend for a desired depth into the rock, usually rather horizontally, but any direction is feasible. The guide frames (43) are mounted to the rock surface opening to the left of an illustrated block of rock. The rock saw wagon (2) of the invention inserted partly into the guide frame (43), partly into the outermost portion of the guide bore (0). A so-called endless cutting diamond wire (w) is spanned between the left wagon (2) and the right wagon (symmetrically arranged, shown in Fig. 3) and shown cutting a portion of the slit to be cut. The forward cutting section of the wire is shown in an arch shape which it will take when cutting. The taut wire will cut such a path which will be rather plane between the two guide bores.

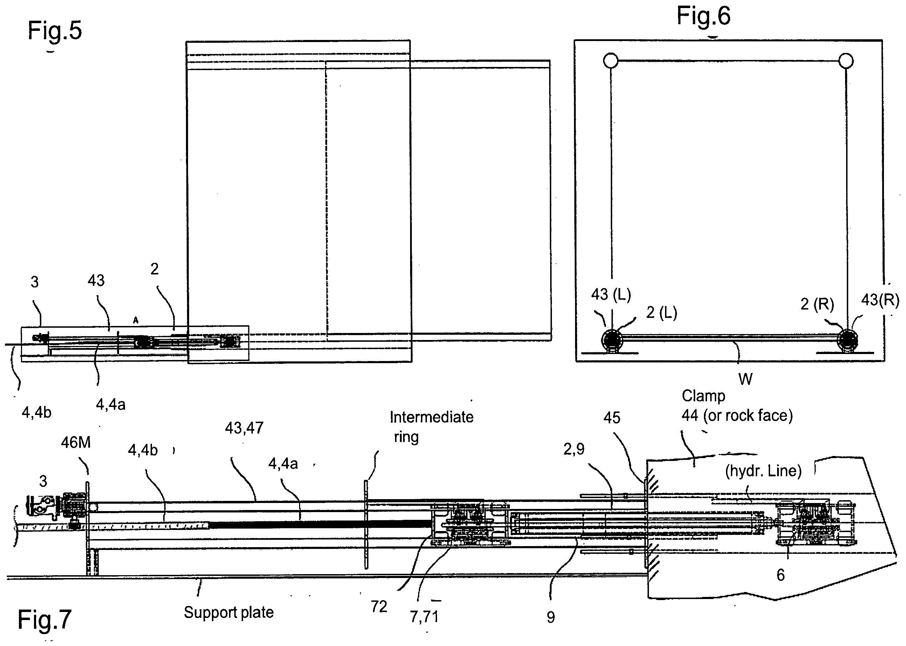

Fig. 5 is a right side section view of what is shown in Fig. 3.
Fig. 6 is a rear end view of the saw arrangement from Fig. 3, cutting the lower slit. The reason for cutting the lower slit first and the upper slit last, is to avoid having the return portion of diamond wire stuck when cutting the final cut of the block which will end up residing on the lower floor.
Fig. 7 is a vertical section through one of the guide frames, the pushing rod (4), a wire saw wagon (2), and a borehole. The wire saw wagon comprises a fore box unit with the front wheel (6), a telescoping body connecting it to the rear box unit with the rear wheel (7), said rear box unit (71) having a rear plate (72) which is connected to the fore end of the rod (4). Hydraulic lines for the motors (6, 7) are to be fed into the borehole (0) as the cutting process progresses inward. In practice, one supply and one return hydraulic line is required for each motor (6, 7), but one may use a common supply and common return line for both motors in order to reduce pressure loss. In addition to the illustrated components one or more lines for conducting flushing and cooling water ahead to the wagons should be mounted in order to remove cut-out rock material from the cut-out slit, and to cool the cutting process and keep the cut and bores clean.

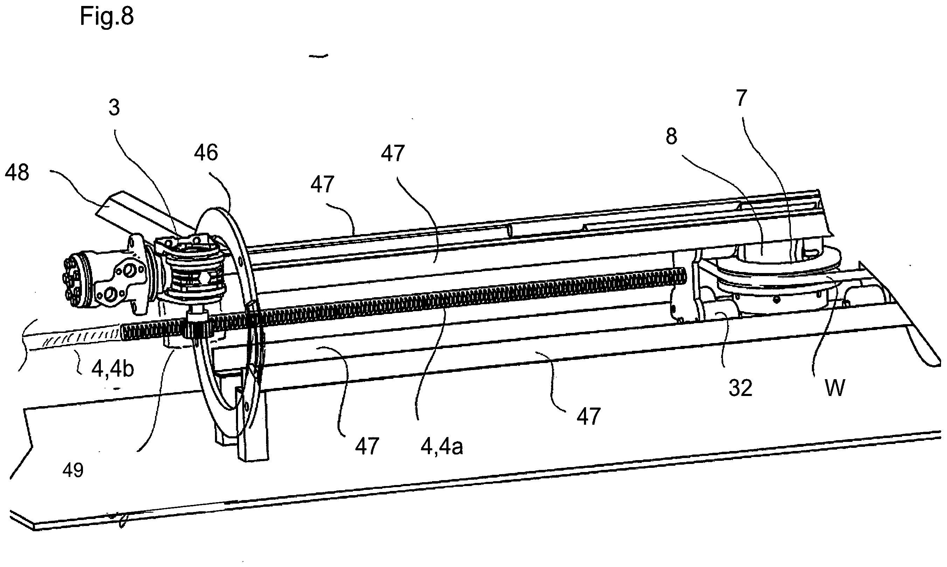

Fig. 8 is an enlarged perspective view of a right guide frame showing the actuator (3) with a cogged wheel driving the rod (4) inwards to push the wagon (2). A backing (49) for the cogged wheel (for the rod running behind the cogged wheel) is illustrated. The rod (4) is illustrated as sections (4a, 4b, ...) which may be connected to push the entire length of the guide bore (0), i.e. the joined sections should constitute up to 100 metres length or more. The motor for the actuator (3) is preferably hydraulic. Hydraulic motors (8) in the wagon (2) are an advantage due to hydraulic cooling, as electric motors would have few ways to dissipate heat.

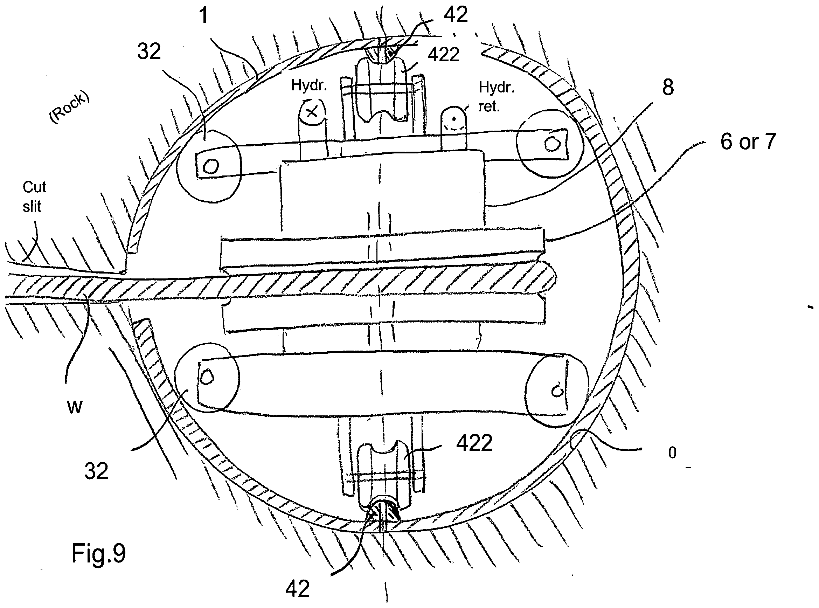

Fig. 9 is a cross-section of a guide bore with an optional guide pipe (1), and a section and part view of a fore or aft wire wheel (6, 7) of the wagon (2) in the guide bore. Guide rails (42) for guide wheels (422) on the wagon (2) are arranged in the liner pipes (0) at least in the outer parts of the guide bores (0), so as for stabilizing the wagons (2) with the guide wire during the initial cutting phase of the slit.

The guide liner pipe is stationary while the device is moving in such way that the wire cuts through the rock between the slits of the pipes. One advantage of a pre-cut slit in the pipe is that it allows the guide liner pipe to be flexible in its cross-section in order to be inserted into and taken out of the boreholes in the rock. When the cutting process is well established and the cutting diamond wire is well established both with its cutting fore portion and its return portion both residing in the progressing cut slit, both the liner pipe and the guide rails may be made redundant, as the cutting wire stabilizes both wagons during the further process. The supporting wheels are according to an embodiment arranged with their axis parallel to the guide bore axis, so as for being free to rotate to adjust the wagon (2) with its wheels directed well against the slit. There are preferably four supporting wheels (32) in the circumference, so as for allowing the wagon to run with the cutting wire horizontally or vertically. The two wheels nearest the cut slit will be pushed against the bore wall at either sides of the cut slit. The slit in the guide pipes (1a, 1b) must be mutually facing and is formed during the sawing process or is pre-formed. If it shall be formed during the sawing process the material of the guide pipes (1a, 1b) is advantageously aluminium or a polymer plastic.

### Description of embodiments of the invention

The invention is a wire saw arranged to carry an endless diamond wire (w), which saw e.g. in rock. The diamond wire (w) is arranged to run between two generally parallel guide bores with or without liner pipes (1a, 1b) or, wherein each guide bore is provided with a longitudinally extending wagon (2) carrying its part of the endless diamond wire (w).

The invention is a wire saw arranged to carry an endless diamond wire (w) for cutting a slit between two parallel guide bores (0), each said guide bore (0) provided with a wagon (2), please see Figs. 1, 2, and 3. The endless diamond wire (w) forms a loop over
a front wire wheel (6a) on a first of said wagons (2), to a front wire wheel (6b) on a second of said wagons (2) to span a transverse cutting path for cutting said slit between said guide bores (0), then extending rearwards to a rear wire wheel (7b) in said second wagon (2), and back across said cut slit to a rear wire wheel (7a) of said first wagon (2), and forward to said front wire wheel (6a) of said first wagon (2) to close said loop. According to the invention at least said two front wire wheels (6a, 6b) are driven each by its separate motor (8a, 8b) driving said diamond wire (w), and said first and second wagons (2) are provided with a telescoping unit (9) to tension said diamond wire (2). Each wagon (2) is provided with a rod (4), each rod provided with an actuator (3) arranged to push said rod (4) with said wagon (2) inward in said guide bore (0) .

In an embodiment of the invention the rod (4) comprises coupled rod sections (4a, 4b, ...) together constituting up to the length of said guide bores (0) . In this way the rod may push the apparatus all the way through the guide bores.

In an 3. The wire saw according to claim 1, wherein said rod (4) being a coiled rod constituting the length of said guide bores (0).

In the illustrated, preferred embodiment, the rod (4) is a cogged bar. Alternatively, the rod is a coiled tubing.

In an embodiment shown in the present drawigns the actuator (3) is arranged outside said guide bore (0), preferably on the guide frame (43) or near the rock face around the opening of said guide bores (0).

In an embodiment of the invention the guide frame comprises guide rails (47) extending between an inner ring (45) to direct or indirect attachment to the rock face around the opening of said guide bores (0), and an outer ring (46) which carries said actuator (3), and each rings (45, 45) with an opening for the endless wire (w).

In an embodiment of the invention the liner pipes (1a, 1b) are arranged at least in the initial part of the guide bores (0). If the rock is weak or cracked up, one may arrange liner pipe along the entire lengths of the guide bores. Before inserting liner pipes or inserting the wagons, the guide bores are preferably camera inspected to assure the borehole wall is smooth. If the borehole is not smooth it may be lined entirely or a smooth wall formed using cement.

In an embodiment liner pipes (1a, 1b) each comprises a clamp (44) for forming an attachment base for said inner ring (45) for the surface frame (43).

The liner pipes (1a, 1b) are made in steel, aluminum, plastic or composite.
In an embodiment of the invention, one or both of the liner pipes (1a, 1b) comprises one or more guide rails (42) in at least the initial outer part of said liner pipes (1a, 1b) preferably perpendicular mounted related to the wire groove of said wheels (6, 7), please see Fig. 9.
Each guide liner pipe (1a, 1b) comprises oppositely facing slits to allow said diamond wire (w) to run to an opposite of said guide liner pipes (1b, 1a).
According to the embodiment each of said actuators (3) comprises an actuator motor (M) on said guide frame (43) for said rods (4). A backing for the cogged rail is shown in Fig. 8.

According to the invention each said first and second wagons (2) is provided with a telescoping unit (9) to enlarge the distance between said front wheel and said rear wheel to tension said diamond wire (2) .
In an embodiment of the invention each wagon (2) comprises a front box unit with said wheel (6), a telescoping middle section with said telescoping unit (9) and a rear box unit (71) with said wheel (7) and with a rear plate (72) connectable to the fore end of the rod (4).
Each telescoping unit (9) may be a pressurized unit arranged to expand and telescopingly extend the telescoping unit (9) and tighten said rear wire wheel (7a, 7b) in a backward direction relative to said front wire wheel (6a, 6b) in order to put said diamond wire (w) under tension.
According to an embodiment of the invention each box unit comprises 8 supporting wheels (32) arranged axially, all sliding along the borehole allowing said wagon (2) rotate back to correct operating position. Those support wheels is all that supports the apparatus against the wall with the cut slit. The wire in the slit is made taut, and forces the orientation of the groove of the wheels (6, 7) of the wagon (2) in the direction of the cut slit, both front and rear. Thus guide rails in the borehole or liner pipe are not required when the cutting process has proceeded a bit into the rock, at least when the return wire has entered the cut slit. A gyro effect of the rotating wheels and motors at even pace may help stabilize the wagons. At working speed the wire runs at about 20 metres per second. If the diameter of the wheels is about 10 to 15 cm, the rotational speed of the wheels controls by the wire speed, and the gyro effect is significant.
In an advantageous embodiment of the invention, at least one of said rear wire wheels (7) is provided with a rear motor.

The guide bores (0) are straight. Alternatively the guide bores (0) have a curvature in order to be able to drill a curved tunnel or shaft
The rock face around the opening may in an embodiment of the invention be formed to a vertical wall.

The most suitable for the purpose is to cut out a slit for the bottom face first, between the two bottom holes, then lateral surfaces between right lower and right upper boreholes, lower left and upper left respectively, and finally cut between the two upper boreholes. Then the square core may be removed by blasting or cutting, and you are left with a tunnel with straight, smooth cut walls, bottom and ceiling. It may alternatively be formed more or less vertically directed shafts.
There is a significant advantage to have cut walls, floor and ceiling of a tunnel (or shaft) because these will have an intact rock to a significantly greater degree than a blasted tunnel, wherein the explosion causes significant cracking deeply into the rock wall. This may be very important with regard to long term storage of radioactive or toxic materials in the tunnels. By sawing out the tunnels the sawn seam will result in that shocks are avoided during the actual cutting. Upon removal of the cut out mass by blasting of the prismatic block, vibrations are significantly reduced compared with an ordinary blasted tunnel. Upon removal of the mass cut by sawing of the carved prism-shaped mass section by section into the tunnel, the blasting is entirely avoided, and thus all the vibrations caused by blasting are avoided. There are special diamond wire systems for the sawing out of the prism-shaped mass, section by section, i.e. cuts at right angles to the boreholes, and such cutting wire systems are not further discussed in this application.
Each guide liner pipe comprises each its oppositely facing slit. At least said two front wire wheels (6a, 6b) are driven by each its motor (8a, 8b) and arranged to drive said diamond wire (w). The diamond wire (w)runs in its return direction across between said guide bores, with or without liner pipes (1b, 1a) between the opposite rear wire wheel (7b) back to the rear wire wheel (7a). Motors (8) on all wire wheels (6, 7) provides a more evenly running diamond wire.

Each wagon (2) comprises a telescoping extendable stem (9), each with a linear actuator (10) arranged to tighten the rear wire wheel (7a, 7b) in a rearwards direction relative to said front wire wheel (6a, 6b) in order to tighten the diamond wire (w). The linear actuator (10) may be a hydraulic or pneumatic cylinder. In general, all motors in the wire saw may be of the hydraulic type, and the hydraulic pressure is supplied in hoses through the hook-on end at the rock surface.
The guide liner pipes (1a, 1b) are arranged to be inserted into each one of generally parallel drilled holes in rock, for a section between the guide liner pipes to be sawed out. It is also possible to arrange the guide liner pipe of wire saw in drilled holes in concrete structures, etc. in order to make sections. In an embodiment the liner pipes are only arranged at the first few metres of the guide bores in order to establish a basis for the surface frame and for stabilizing the wagons and the diamond wire during the beginning of the cutting process.

The wire saw according to the invention is arranged so that the guide liner pipes (1a, 1b) are arranged in generally horizontally drilled holes. A significant advantage of using pair-wise parallel horizontally drilled holes is that one is capable of making a horizontal section (between boreholes at the same elevation) and thus horizontal tunnels with the apparatus. This prevents slack on the wire and thus one may achieve a flat bottom and a flat roof in the tunnel. Thus one may achieve particularly even floor in the tunnel so that it becomes easy to arrange a runway or railway for which there are strict requirements with regard to the evenness of the substrate.

According to an embodiment of the invention the guide liner pipes are arranged in pairs of parallel drilled holes to form a cut out hole with polygonal cross-section, e.g. rectangular, triangular, pentagonal, hexagonal.

The tractors (3) are arranged to be controlled at individual speed rates. It is usually desirable to allow the tractors run parallelly in order to make the diamond wire run the shortest distance between boreholes. The drilled holes may be straight if you want a straight tunnel (or shaft). The drilled holes may have a curvature to drill a curved tunnel or shaft.

The wire saw may be remotely controlled wherein the motors are operated via hydraulic hoses so that the operator may stay outside the drill area. It may therefore be so that the wire saw may be operated under water or in places where an operator, due to health and safety considerations, shall not stay e.g. for a toxic or radioactive area.

For other uses, except for cutting in a rock, the wire saw according to the invention may have guide liner pipes (1a, 1b) arranged to be carried in a structural support frame on either sides of an object subject to a cut, for the sawing of a section between the guide liner pipes. Thus it is possible to put the guide pipes of the wire saw on either sides of a pillar or a pipe, to cut it off in sections e.g. such as on land, above water or under water, e.g. to cut down concrete platforms, pipelines or the similar.

## Claims

1. A wire saw system with an endless diamond wire (w) for cutting a slit between two parallel guide bores (0), the wire saw system further comprising two wagons for inserting into each of said guide bores (0), each wagon comprising a front wire wheel (6a, 6b) and a rear wire wheel (7a, 7b),
- said endless diamond wire (w) forming a loop over the front wire wheel (6a) on a first of said wagons (2), to the front wire wheel (6b) on a second of said wagons (2) to span a transverse cutting path for cutting said slit between said guide bores (0), then extending rearwards to the rear wire wheel (7b) in said second wagon (2), and back across said cut slit to the rear wire wheel (7a) of said first wagon (2), and forward to said front wire wheel (6a) of said first wagon (2) to close said loop,
**characterized in that**
- at least said two front wire wheels (6a, 6b) are driven each by its separate motor (8a, 8b) driving said diamond wire (w),
- each of said first and second wagons is provided with a telescoping unit (9) arranged to tension said diamond wire (2),
- each wagon (2) is provided with a rod (4), each rod provided with an actuator (3) arranged to push said rod (4) with said wagon (2) inward in said guide bore (0).

2. The wire saw system according to claim 1, wherein said rod (4) comprises coupled rod sections (4a, 4b, ...) with a coupled total length of said guide bores (0).

3. The wire saw system according to claim 1, wherein said rod (4) being a coiled rod constituting the length of said guide bores (0).

4. The wire saw system according to claim 1 or 2, wherein said rod (4) being a cogged bar.

5. The wire saw system according to claim 1, 2, 3 or 4, wherein said actuator (3) is arranged outside said guide bore (0).

6. The wire saw system according to claim 5, said actuator (3) arranged on a guide frame (43) on or near the rock face around the opening of said guide bores (0).

7. The wire saw system according to claim 6, wherein the guide frame comprises guide rails (47) extending between an inner ring (45) for direct or indirect attachment to the rock face around the opening of said guide bores (0), and an outer ring (46) which carries said actuator (3), and each rings (45, 45) with an opening for the endless wire (w).

8. The wire saw system according to one of the claims 1 to 7, comprising liner pipes (1a, 1b) to be arranged at least in the initial part of the guide bores (0).

9. The wire saw system according to claim 8, wherein said liner pipes (1a, 1b) each comprises a clamp (44) for forming an attachment base for said inner ring (45).

10. The wire saw system according to claim 8 or 9, wherein said liner pipes (1a, 1b) are made in steel, aluminum, plastic or composite.

11. The wire saw system according to claim 8, 9 or 10, wherein said liner pipes (1a, 1b) comprise one or more guide rails (42) in at least the initial outer part of said liner pipes (1a, 1b) preferably perpendicularly mounted related to the wire groove of said wheels (6, 7).

12. The wire saw system according to one of the claims 8 to 11, wherein each guide liner pipe (1a, 1b) comprises oppositely facing slits to allow said diamond wire (w) to run to an opposite of said guide liner pipes (1b, 1a).

13. The wire saw system according to one of the claims 1 to 12, wherein each of said actuators (3) comprises an actuator motor (M) on said guide frame (43) for said rods (4). (omitted, already a feature of claim 1).

14. The wire saw system according to one of the claims 1 to 13, wherein each wagon (2) comprises a front box unit with said wheel (6), a telescoping middle section with said telescoping unit (9) and a rear box unit (71) with said wheel (7) and with a rear plate (72) connectable to the fore end of the rod (4).

15. The wire saw system according to claim 14, wherein each telescoping unit (9) is a pressurized unit arranged to expand and telescopingly extend the telescoping unit (9) and tighten said rear wire wheel (7a, 7b) in a backward direction relative to said front wire wheel (6a, 6b) in order to put said diamond wire (w) under tension.

16. The wire saw system according to claim 14 or 15, wherein each box unit comprises eight supporting wheels (32) arranged axially, all sliding along the borehole allowing said wagon (2) rotate back to correct operating position.

17. The wire saw system according to one of claims 1 to 16, wherein at least one of said rear wire wheels (7) is provided with a rear motor.

18. The wire saw system according to one of claims 1 to 17, wherein said guide bores (0) are straight.

19. The wire saw system according to one of claims 1 to 18, wherein said guide bores (0) have a curvature.

## Patentansprüche

1. Drahtsägesystem mit einem endlosen Diamantdraht (w) zum Schneiden eines Schlitzes zwischen zwei parallelen Führungsbohrungen (0), wobei das Drahtsägesystem des Weiteren zwei Wagen zum Einsetzen in jede der besagten Führungsbohrungen (0) aufweist, wobei jeder Wagen ein vorderes Seilrad (6a, 6b) und ein hinteres Seilrad (7a, 7b) umfasst,
- der besagte endlose Diamantdraht (w) eine Schleife über das vordere Seilrad (6a) an einem ersten der besagten Wagen (2) zu dem vorderen Seilrad (6b) an einem zweiten der Wagen (2) bildet, um einen Querschneidepfad zum Schneiden des besagten Schlitzes zwischen den besagten Führungsbohrungen (0) zu überspannen, und sich dann rückwärts zu dem hinteren Seilrad (7b) in dem zweiten Wagen (2) und rückwärts über den besagten Schnittschlitz to dem hinteren Seilrad (7a) des besagten ersten Wagens (2) und vorwärts zu besagtem vorderen Seilrad (6a) des besagten ersten Wagens (2) zu erstrecken, um die besagte Schleife zu schließen,
**dadurch gekennzeichnet, dass**
- mindestens die besagten beiden vorderen Seilräder (6a, 6b) jeweils von ihrem separaten Motor (8a, 8b) angetrieben werden, den besagten Diamantdraht (w) antreibend,
- jeder der besagten ersten und zweiten Wagen (2) mit einer Teleskopeinheit (9) zum Spannen des Diamantdrahts (2) versehen sind,
- jeder Wagen (2) mit einer Stange (4) versehen ist, jede Stange mit einem Betätiger (3) versehen ist, der so angeordnet ist, dass er die besagte Stange (4) mit besagtem Wagen (2) in das Innere besagter Führungsbohrung (0) schiebt.

2. Drahtsägesystem nach Anspruch 1, wobei besagte Stange (4) gekoppelte Stangenabschnitte (4a, 4b, ...) mit einer Kopplungsgesamtlänge umfasst, die der Länge der Führungsbohrungen (0) entspricht.

3. Drahtsägesystem nach Anspruch 1, wobei besagte Stange (4) eine Spiralstange ist, die der Länge der Führungsbohrungen (0) entspricht.

4. Drahtsägesystem nach Anspruch 1 oder 2, wobei besagte Stange (4) eine Zahnstange ist.

5. Drahtsägesystem nach Anspruch 1, 2, 3 oder 4, wobei der besagte Betätiger (3) außerhalb der besagten Führungsbohrung (0) angeordnet ist.

6. Drahtsägesystem nach Anspruch 5, wobei besagter Betätiger (3) auf einem Führungsrahmen (43) an oder in der Nähe der Felswand um die Öffnung der besagten Führungsbohrungen (0) herum angeordnet ist.

7. Drahtsägesystem nach Anspruch 6, wobei der Führungsrahmen Führungsschienen (47) aufweist, die sich zwischen einem Innenring (45) zur direkten oder indirekten Befestigung an der Felswand um die Öffnung der Führungsbohrungen (0) herum und einem Außenring (46), der den Betätiger (3) trägt, erstrecken, und jeder der Ringe (45, 45) mit einer Öffnung für den Endlosdraht (w) versehen ist.

8. Drahtsägesystem nach einem der Ansprüche 1 bis 7, umfassend Rohrleitungen (1a, 1b) zur Anordnung zumindest im Anfangsteil der Führungsbohrungen (0).

9. Drahtsägesystem nach Anspruch 8, wobei besagte Rohrleitungen (1a, 1b) jeweils eine Klemme (44) zum Bilden einer Befestigungsbasis für den besagten Innenring (45) aufweisen.

10. Drahtsägesystem nach Anspruch 8 oder 9, wobei besagte Rohrleitungen (1a, 1b) aus Stahl, Aluminium, Kunststoff oder Verbundwerkstoff hergestellt sind.

11. Drahtsägesystem nach Anspruch 8, 9 oder 10, wobei besagte Rohrleitungen (1a, 1b) eine oder mehrere Führungsschienen (42) in zumindest ersten äußeren Teil der besagten Rohrleitungen (1a, 1b) aufweisen, die vorzugsweise senkrecht zur Seilrille der besagten Räder (6, 7) angebracht sind.

12. Drahtsägesystem nach einem der Ansprüche 8 bis 11, wobei jede Führungsrohrleitung (1a, 1b) gegenüberliegende Schlitze aufweist, damit sich besagter Diamantdraht (w) zu einem Gegenstück zu besagten Führungsrohrleitungen (1b, 1a) bewegen kann.

13. Drahtsägesystem nach einem der Ansprüche 1 bis 12, wobei jeder der Betätiger (3) einen Betätigermotor (M) für die Stangen (4) auf besagtem Führungsrahmen (43) aufweist.

14. Drahtsägesystem nach einem der Ansprüche 1 bis 13, wobei jeder Wagen (2) eine Frontbox-Einheit mit besagtem Rad (6), einen zusammenschiebbaren Mittelabschnitt mit besagter Teleskopeinheit (9) und eine hintere Box-Einheit (71) mit besagtem Rad (7) und mit einer Rückplatte (72), die mit dem vorderen Ende der Stange (4) verbunden werden kann, aufweist.

15. Drahtsägesystem nach Anspruch 14, wobei jede Teleskopeinheit (9) eine unter Druck gesetzte Einheit ist, die so angeordnet ist, dass sie die Teleskopeinheit (9) ausdehnen kann und teleskopisch ausdehnt und das hintere Seilrad (7a, 7b) in einer Rückwärtsrichtung relativ zu dem vorderen Seilrad (6a, 6b) anzieht, um besagten Diamantdraht (w) unter Spannung zu setzen.

16. Drahtsägesystem nach Anspruch 14 oder 15, wobei jede Box-Einheit 8 unterstützende Räder (32) aufweist, die axial angeordnet sind, wobei alle entlang des Bohrlochs laufen, was dem Wagen (2) ermöglicht, sich wieder in die richtige Betriebsposition zurückzudrehen.

17. Drahtsägesystem nach einem der Ansprüche 1 bis 16, wobei mindestens eines der hinteren Seilräder (7) mit einem Heckmotor versehen ist.

18. Drahtsägesystem nach einem der Ansprüche 1 bis 17, wobei die Führungsbohrungen (0) gerade sind.

19. Drahtsägesystem nach einem der Ansprüche 1 bis 18, wobei die Führungsbohrungen (0) eine Krümmung aufweisen.

## Revendications

1. Dispositif de scie à fil avec un fil (w) diamanté sans fin pour couper une fente entre deux alésages de guidage (0) parallèles, le dispositif de scie à fil comprenant en outre deux wagons pour insertion dans chacun desdits alésages de guidage (0), chaque wagon comprenant une roue de fil avant (6a, 6b) et une roue de fil arrière (7a, 7b),
- ledit fil (w) diamanté sans fin formant une boucle sur la roue avant (6a) sur un premier desdits wagons (2), sur la roue avant (6b) sur un second desdits wagons (2) pour traverser un chemin de coupe transversal pour couper ladite fente entre lesdits alésages de guidage (0), puis s'étendant vers l'arrière jusqu'à la roue arrière (7b) dans ledit second wagon (2), et de nouveau en travers de ladite fente coupée jusqu'à la roue arrière (7a) dudit premier wagon (2), et en avant jusqu'à ladite roue de fil avant (6a) dudit premier wagon (2) pour fermer ladite boucle,
**caractérisé en ce que**
- au moins lesdites deux roues de fil avant (6a, 6b) sont entraînées chacune par son moteur séparé (8a, 8b) entraînant ledit fil (w) diamanté,
- chacun desdits premier et second wagons est pourvu d'une unité télescopique (9) agencée pour tendre ledit fil diamanté (2),
- chaque wagon (2) est pourvu d'une tige (4), chaque tige étant pourvue d'un actionneur (3) agencé pour pousser ladite tige (4) avec ledit wagon (2) vers l'intérieur dans ledit alésage de guidage (0).

2. Le dispositif de scie à fil selon la revendication 1, dans lequel ladite tige (4) comprend des sections de tige (4a, 4b, ...) couplées constituant avec une longueur totale couplée desdits alésages de guidage (0).

3. Le dispositif de scie à fil selon la revendication 1, dans lequel ladite tige (4) est une tige enroulée constituant la longueur desdits alésages de guidage (0).

4. Le dispositif de scie à fil selon la revendication 1 ou 2, dans lequel ladite tige (4) est une barre dentée.

5. Le dispositif de scie à fil selon la revendication 1, 2, 3 ou 4, dans lequel ledit actionneur (3) est agencé à l'extérieur dudit alésage de guidage (0).

6. Le dispositif de scie à fil selon la revendication 5, ledit actionneur (3) étant agencé sur un châssis de guidage (43) sur ou à proximité de la face de la roche autour de l'ouverture desdits alésages de guidage (0).

7. Le dispositif de scie à fil selon la revendication 6, dans lequel le cadre de guidage comprend des rails de guidage (47) s'étendant entre une bague (45) intérieure pour une fixation directe ou indirecte à la face de roche autour de l'ouverture desdits alésages de guidage (0), et une bague extérieure (46) qui porte ledit actionneur (3), et chaque bague (45, 45) avec une ouverture pour le fil (w) sans fin.

8. Le dispositif de scie à fil selon l'une des revendications 1 à 7, comprenant des tubes de revêtement (1a, 1b) pour être disposés au moins dans la partie initiale des alésages de guidage (0).

9. Le dispositif de scie à fil selon la revendication 8, dans lequel lesdits tubes de revêtement (1a, 1b) comprennent chacun une pince (44) pour former une base de fixation pour ladite bague (45) intérieure.

10. Le dispositif de scie à fil selon la revendication 8 ou 9, dans lequel lesdits tubes de revêtement (1a, 1b) sont faits en acier, aluminium, plastique ou composite.

11. Le dispositif de scie à fil selon la revendication 8, 9 ou 10, dans lequel lesdits tubes de revêtement (1a, 1b) comprennent un ou plusieurs rails de guidage (42) dans au moins la partie externe initiale desdits tubes de revêtement (1a, 1b) de préférence montés perpendiculairement à la rainure de fil desdites roues (6, 7).

12. Le dispositif de scie à fil selon l'une des revendications 8 à 11, dans lequel chaque guide de tube de revêtement (1a, 1b) comporte des fentes opposées se faisant face pour permettre audit fil (w) diamanté de passer à l'opposé desdits guides de tubes de revêtement (1b, 1a).

13. Le dispositif de scie à fil selon l'une des revendications 1 à 12, dans lequel chacun desdits actionneurs (3) comprend un moteur (M) d'actionnement sur ledit châssis de guidage (43) pour lesdites tiges (4).

14. Le dispositif de scie à fil selon l'une des revendications 1 à 13, dans lequel chaque wagon (2) comprend une unité de caisse avant avec ladite roue (6), une section médiane télescopique avec ladite unité télescopique (9) et une unité de caisse arrière (71) avec ladite roue (7) et avec une plaque arrière (72) pouvant être connectée à l'extrémité avant de la tige (4).

15. Le dispositif de scie à fil selon la revendication 14, dans lequel chaque unité télescopique (9) est une unité pressurisée agencée pour se développer et s'étendre de manière télescopique et serrer ladite roue à fil arrière (7a, 7b) dans une direction arrière par rapport à ladite roue de fil avant (6a, 6b) afin de mettre sous tension ledit fil (w) diamanté.

16. Le dispositif de scie à fil selon la revendication 14 ou 15, dans lequel chaque unité de boîte comprend huit roues de support (32) agencées axialement, toutes coulissant le long du trou de forage permettant audit wagon (2) de retourner vers une position de fonctionnement correcte.

17. Le dispositif de scie à fil selon l'une des revendications 1 à 16, dans lequel au moins l'une desdites roues à fil arrière (7) est pourvue d'un moteur arrière.

18. Le dispositif de scie à fil selon l'une des revendications 1 à 17, dans lequel lesdits alésages de guidage (0) sont droits.

19. Le dispositif de scie à fil selon l'une des revendications 1 à 18, dans lequel lesdits alésages de guidage (0) présentent une courbure.
